(19) Europäisches Patentamt
European Patent Office
Office européen des brevets

(11) **EP 4 768 562 A1**

## (12) EUROPEAN PATENT APPLICATION
published in accordance with Art. 153(4) EPC

(43) Date of publication:
**01.07.2026 Bulletin 2026/27**

(21) Application number: **24859613.2**

(22) Date of filing: **22.08.2024**

(51) International Patent Classification (IPC):
**C12C 5/02** *(2006.01)* **C12G 3/04** *(2019.01)*
**C12G 3/06** *(2006.01)*

(52) Cooperative Patent Classification (CPC):
**C12C 5/02; C12G 3/04; C12G 3/06**

(86) International application number:
**PCT/JP2024/029871**

(87) International publication number:
**WO 2025/047580 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **25.08.2023 JP 2023137302**

(71) Applicant: **Suntory Holdings Limited
Osaka-shi, Osaka 530-8203 (JP)**

(72) Inventor: **YOSHII Takaaki
Kawasaki-shi, Kanagawa 211-0067 (JP)**

(74) Representative: **Vossius & Partner
Patentanwälte Rechtsanwälte mbB
Siebertstraße 3
81675 München (DE)**

## (54) BEER-FLAVORED BEVERAGE

(57) Provided is a beer-flavored beverage having an alcohol content of 10.0 (v/v)% or more, a real extract concentration of 10.5 (w/w)% or more, and an ethyl caprylate content of 25 ppb by mass or more.

EP 4 768 562 A1

**Description**

Technical Field

The present invention relates to a beer-flavored beverage and a method for producing a beer-flavored beverage.

Background Art

In the related art, various beer-flavored beverages have been developed and distributed to the market in response to recent diversified preferences of consumers.

For example, Patent Document 1 discloses a high alcohol content beer-flavored beverage containing citric acid and phenethyl alcohol, the citric acid content being 270 mg/L or more and 1100 mg/L or less, and the phenethyl alcohol content being 40 mg/L or more and 180 mg/L or less.

Citation List

Patent Document

Patent Document 1: JP 2021-159020 A

Summary of Invention

Technical Problem

As a result of a study conducted by the inventor of the present invention, it has been found that a beer-flavored beverage having a high alcohol content has a refreshing taste, but it tends to be a beverage in which not only an unsuitable smell of alcohol is easily felt, but also a rich flavor or thickness suitable for a beer-flavored beverage is less likely to be felt.

Under such circumstances, for example, there is a demand for a beer-flavored beverage having a suitable rich flavor and thickness, in which a smell of alcohol unsuitable for beer-flavored beverages is suppressed.

Solution to Problem

An aspect of the present invention provides a beer-flavored beverage having a real extract concentration and an ethyl caprylate content of predetermined values or more.

Specifically, the present invention provides the following aspects [1] to [9].

[1] A beer-flavored beverage, having:

an alcohol content of 10.0 (v/v)% or more;
a real extract concentration of 10.5 (w/w)% or more; and
an ethyl caprylate content of 25 ppb by mass or more.

[2] The beer-flavored beverage according to [1], wherein the alcohol content is 16.0 (v/v)% or more and 30.0 (v/v)% or less.

[3] The beer-flavored beverage according to [1] or [2], wherein the real extract concentration is 10.5 (w/w)% or more and 40.0 (w/w)% or less.

[4] The beer-flavored beverage according to any one of [1] to [3], wherein the ethyl caprylate content is 25 ppb by mass or more and 3000 ppb by mass or less.

[5] The beer-flavored beverage according to any one of [1] to [4], wherein a ratio of the real extract concentration (unit: (w/w)%) to the alcohol content (unit: (v/v)%), [real extract concentration/alcohol content], is 0.10 or more and 5.00 or less.

[6] The beer-flavored beverage according to any one of [1] to [5], wherein a ratio of the ethyl caprylate content (unit: ppb by mass) to the alcohol content (unit: (v/v)%), [the ethyl caprylate content/the alcohol content], is 1.0 or more and 400.0 or less.

[7] The beer-flavored beverage according to any one of [1] to [6], wherein a ratio of the ethyl caprylate content (unit: ppb by mass) to the real extract concentration (unit: (w/w)%), [the ethyl caprylate content/the real extract concentration], is 2.0 or more and 400.0 or less.

[8] A method for producing a beer-flavored beverage, the method including at least steps (a) to (c) set forth below:

· step (a): a step of adjusting and/or confirming an alcohol content of the beer-flavored beverage to be 10.0 (v/v)% or more;

· step (b): a step of adjusting and/or confirming a real extract concentration of the beer-flavored beverage to be 10.5 (w/w)% or more; and

· step (c): a step of adjusting and/or confirming an ethyl caprylate content of the beer-flavored beverage to be 25 ppb by mass or more.

[9] A beer-flavored beverage, having:

a real extract concentration of 10.5 (w/w)% or more; and
an ethyl caprylate content of 25 ppb by mass or more.

Advantageous Effects of Invention

The beer-flavored beverage according to a preferred aspect of the present invention can be a beverage having a suitable rich flavor and thickness, in which a smell of alcohol unsuitable for beer-flavored beverages is suppressed.

Description of Embodiments

For numerical ranges described in the present specification, any combination of upper and lower limits is possible. For example, a numerical range of "preferably from 30 to 100, more preferably from 40 to 80" also includes a range of "from 30 to 80" and a range of "from 40 to 100" in the numerical range described in the present specification. For example, the numerical range of "preferably 30 or more, and more preferably 40 or more, and preferably 100 or less, and more preferably 80 or less" also includes a range of "from 30 to 80" and a range of "from 40 to 100" in the numerical range described in the present specification.

As a numerical range described in the present specification, for example, a description of "from 60 to 100" means a range "60 or more (equal to 60, or more than 60) and 100 or less (equal to 100, or less than 100)".

1. Beer-flavored beverage

In the present specification, the term "beer-flavored beverage" refers to an alcohol-containing beverage or an alcohol-free beverage having a beer-like flavor. That is, unless otherwise specified, the beer-flavored beverage in the present specification encompasses any beverages with a flavor of beer.

Thus, the "beer-flavored beverage" includes not only beer and fermented beer-flavored beverages, which are malt-fermented beverages produced by fermenting malt, hops, and water as base materials with yeast, but also beverages to which a beer flavoring containing a flavor component such as an ester, a higher alcohol, lactone, or the like, is added.

The beer-flavored beverage according to an aspect of the present invention can include a carbonated beverage and/or a non-carbonated beverage.

Further, the beer-flavored beverage according to an aspect of the present invention can be consumed without dilution, but it may be diluted with water, ice, an edible aqueous solution, or the like, and consumed.

As used herein, the term "edible aqueous solution" refers to a solution in which one or more edible components are dissolved in water. The edible component is not particularly limited, and it may be a solid, a liquid such as vegetable oil, or a gas such as carbon dioxide gas.

Examples of the edible aqueous solution include a sparkling aqueous solution such as carbonated water, cider, Ramune soda drink, cola, or the like, a non-sparkling aqueous solution such as a soft drink, tea, black tea, fruit juice, vegetable juice, or the like, and two or more thereof may be used in combination.

The carbon dioxide gas concentration of the edible aqueous solution may be 0.30 (w/w)% or more, 0.35 (w/w)% or more, 0.40 (w/w)% or more, 0.42 (w/w)% or more, or 0.45 (w/w)% or more, and it may be 0.90 (w/w)% or less, 0.80 (w/w)% or less, 0.70 (w/w)% or less, 0.60 (w/w) or less, or 0.55 (w/w)% or less.

Examples of the flavor component contained in the beer flavoring include isoamyl acetate, ethyl acetate, n-propanol, isobutanol, acetaldehyde, ethyl caproate, ethyl caprylate, isoamyl propionate, linalool, geraniol, citral, 4-vinylguaiacol (4-VG), 4-methyl-3-pentenoic acid, 2-methyl-2-pentenoic acid, 1,4-cineole, 1,8-cineole, 2,3-diethyl-5-methylpyrazine, γ-decanolactone, γ-undecalactone, ethyl hexanoate, ethyl 2-methylbutyrate, ethyl n-butyrate, myrcene, citral, limonene, maltol, ethyl maltol, phenylacetic acid, furaneol, furfural, methional, 3-methyl-2-butene-1-thiol, 3-methyl-2-butanethiol, diacetyl, ferulic acid, geranic acid, geranylacetate, ethyl butyrate, octanoic acid, decanoic acid, 9-decenoic acid, nonanoic acid, tetradecanoic acid, propanoic acid, 2-methylpropanoic acid, γ-butyrolactone, 2-aminoacetophenone, ethyl 3-phenylpropionate, 2-ethyl-4-hydroxy-5-methyl-3(2H)-furanone, dimethylsulfone, 3-methylcyclopentane-1,2-dione, 2-methylbutanal, 3-methylbutanal, 2-methyltetrahydrofuran-3-one, 2-acetylfuran, 2-methyltetrahydrofuran-3-one, hexanal, hexanol, cis-3-hexenal, 1-octen-3-ol, β-eudesmol, 4-mercapto-4-methylpentan-2-one, β-caryophyllene, β-myrcene, furfuryl alcohol, 2-ethylpyrazine, 2,3-dimethylpyrazine, 2-methylbutyl acetate, isoamyl alcohol, 5-hydroxymethylfurfural, phenylacetaldehyde, 1-phenyl-3-butene-1-one, trans-2-hexenal, nonanal, and phenethyl alcohol.

In addition, the beer-flavored beverage according to an aspect of the present invention may be a fermented beer-flavored beverage that has undergone a fermentation step using yeast or may be a non-fermented alcohol-containing beer-flavored beverage to which spirits (distilled liquor) and the like are added without undergoing the fermentation step. The fermented beer-flavored beverage may be a beverage to which alcohol (spirits, distilled liquor) is added, or may be a beverage to which alcohol (spirits, distilled liquor) is not added.

The fermented beer-flavored beverage may be a top-fermented beer-flavored beverage (ale beer-flavored beverage) brewed through a fermentation step using a top-fermenting yeast (such as Saccharomyces), a bottom-fermented beer-flavored beverage (lager beer-flavored beverage, pilsner beer-flavored beverage) brewed through a fermentation step using a bottom-fermenting yeast (such as Saccharomyces), a fermented beer-flavored beverage produced by using a top-fermenting yeast and a bottom-fermenting yeast at the same fermentation step or separate fermentation steps, or a beverage obtained by mixing a top-fermented beer-flavored beverage and a bottom-fermented beer-flavored beverage.

The term "fermentation" as used herein may be alcoholic fermentation that produces alcohol, or may be non-alcoholic fermentation that does not produce alcohol. In the case of non-alcoholic fermentation, a beer-flavored beverage having an adjusted alcohol content can be prepared by adding spirits (distilled liquor) or the like.

In addition, the beer-flavored beverage of an aspect of the present invention may be a malt-containing beer-flavored beverage using malt as a base material, or may be a malt-free beer-flavored beverage not using malt. Examples of the malt-containing beer-flavored beverage include barley malt-containing beer-flavored beverages.

In the beer-flavored beverage according to an aspect of the present invention, the alcohol content (ethanol content) is 10.0 (v/v)% or more. In the present specification, the "high alcohol content beer-flavored beverage" refers to a beer-flavored beverage having an alcohol content of 10.0 (v/v)% or more.

An alcohol content (ethanol content) of the beer-flavored beverage according to an aspect of the present invention is 10.0 (v/v)% or more. The alcohol content may also be 10.5 (v/v)% or more, 11.0 (v/v)% or more, 11.5 (v/v)% or more, 12.0 (v/v)% or more, 12.5 (v/v)% or more, 13.0 (v/v)% or more, 13.5 (v/v)% or more, 14.0 (v/v)% or more, 14.5 (v/v)% or more, 15.0 (v/v)% or more, 15.5 (v/v)% or more, 16.0 (v/v)% or more, 16.5 (v/v)% or more, 17.0 (v/v)% or more, 17.5 (v/v)% or more, 18.0 (v/v)% or more, 18.5 (v/v)% or more, 19.0 (v/v)% or more, 19.5 (v/v)% or more, 20.0 (v/v)% or more, 21.0 (v/v)% or more, 22.0 (v/v)% or more, 23.0 (v/v)% or more, 24.0 (v/v)% or more, 25.0 (v/v)% or more, 26.0 (v/v)% or more, 27.0 (v/v)% or more, 28.0 (v/v)% or more, 29.0 (v/v)% or more, 30.0 (v/v)% or more, and it may also be 60.0 (v/v)% or less, 57.0 (v/v)% or less, 55.0 (v/v)% or less, 53.0 (v/v)% or less, 50.0 (v/v)% or less, 47.0 (v/v)% or less, 45.0 (v/v)% or less, 43.0 (v/v)% or less, 40.0 (v/v)% or less, 37.0 (v/v)% or less, 35.0 (v/v)% or less, 34.0 (v/v)% or less, 33.0 (v/v)% or less, 32.0 (v/v)% or less, 31.0 (v/v)% or less, 30.0 (v/v)% or less, 29.0 (v/v)% or less, 28.0 (v/v)% or less, 27.0 (v/v)% or less, 26.0 (v/v)% or less, 25.0 (v/v)% or less, 24.0 (v/v)% or less, 23.0 (v/v)% or less, 22.0 (v/v)% or less, 21.0 (v/v)% or less, or 20.0 (v/v)% or less.

In the beer-flavored beverage according to another aspect of the present invention, the alcohol content (ethanol content) may be less than 10.0 (v/v)%.

The alcohol content of the beer-flavored beverage of this aspect may be less than 10.0 (v/v)%, 9.5 (v/v)% or less, 9.0 (v/v)% or less, 8.5 (v/v)% or less, 8.0 (v/v)% or less, 7.5 (v/v)% or less, 7.0 (v/v)% or less, 6.5 (v/v)% or less, 6.0 (v/v)% or less, 5.5 (v/v)% or less, 5.0 (v/v)% or less, 4.5 (v/v)% or less, 4.0 (v/v)% or less, 3.5 (v/v)% or less, 3.0 (v/v)% or less, 2.5 (v/v)% or less, 2.0 (v/v)% or less, 1.5 (v/v)% or less, 1.0 (v/v)% or less, less than 1.0 (v/v)%, 0.9 (v/v)% or less, 0.8 (v/v)% or less, 0.7 (v/v)% or less, 0.6 (v/v)% or less, 0.5 (v/v)% or less, or less than 0.5 (v/v)%, and it may be 0.0 (v/v)% or more, more than 0.0 (v/v)%, 0.10 (v/v)% or more, 0.20 (v/v)% or more, 0.30 (v/v)% or more, 0.40 (v/v)% or more, 0.50 (v/v)% or more, 0.60 (v/v)% or more, 0.70 (v/v)% or more, 0.80 (v/v)% or more, 0.90 (v/v)% or more, 1.0 (v/v)% or more, 1.5 (v/v)% or more, 2.0 (v/v)% or more, 2.5 (v/v)% or more, 3.0 (v/v)% or more, 3.5 (v/v)% or more, 4.0 (v/v)% or more, 4.5 (v/v)% or more, 5.0 (v/v)% or more, 5.5 (v/v)% or more, 6.0 (v/v)% or more, 6.5 (v/v)% or more, 7.0 (v/v)% or more, 7.5 (v/v)% or more, 8.0 (v/v)% or more, 8.5 (v/v)% or more, 9.0 (v/v)% or more, 9.5 (v/v)% or more, or 10.0 (v/v)% or more.

Note that, as used herein, the alcohol content is indicated as a percentage ((v/v)%) based on volume/volume. The content of alcohol of the beverage can be measured by any known method and can be measured, for example, with a vibrating densimeter.

The alcohol content of the beer-flavored beverage according to an aspect of the present invention can be adjusted to a desired range by appropriately setting the types of raw materials (such as barley, malt, corn grits, and sugar solution), the amounts of raw materials, the type of enzyme, the amount of enzyme added, the timing of enzyme addition, the saccharification time in a preparation tank, the protein decomposition time in the preparation tank, the pH in the preparation tank, the pH in a preparation step (wort production step from feeding of malt until before addition of yeast), the amount of the acid to be added used in the pH adjustment, the timing of the pH adjustment (such as at the time of preparation, fermentation. or completion of fermentation, before beer filtration, and after beer filtration), the set temperature and holding time in each temperature region in preparation of wort (including during saccharification), the original extract concentration in a pre-fermentation liquid, the original extract concentration in the fermentation step, the fermentation conditions (such as the oxygen concentration, aeration conditions, yeast species, amount of yeast added, the number of yeast grown, the removal timing of yeast, fermentation temperature, fermentation time, pressure setting, and carbon dioxide concentration), presence or absence of addition of a spirit, a distilled alcohol or the like, the addition amount in the case of addition, and the like.

The beer-flavored beverage according to an aspect of the present invention may contain a spirit (distilled liquor) derived from grain as an alcohol component to adjust the alcohol content to the range described above.

In the present specification, the term "spirit(s)" means an alcoholic beverage produced by saccharifying grain, such as wheat, rice, buckwheat, corn, potato, or sugar cane, as a base material using malt or, as necessary, an enzymatic agent, fermenting the saccharified product using yeast, and then distilling the fermented product. The grain, as a raw material of spirits, is preferably a plant belonging to the family Gramineae, and more preferably wheat.

In the beer-flavored beverage, as the alcohol content increases, the more refreshing taste can be obtained. However, the beer-flavored beverage tends to have a smell of alcohol, which is unsuitable for beer-flavored beverages, and a rich flavor and thickness suitable for beer-flavored beverages are less likely to be felt. Such an issue is particularly likely to occur in a high alcohol content beer-flavored beverage.

In view of the above-described problem, a beer-flavored beverage according to an aspect of the present invention is a beer-flavored beverage in which an unsuitable smell of alcohol is suppressed and suitable rich flavor and thickness are improved, obtained by adjusting the real extract concentration and the ethyl caprylate content. In particular, the higher the alcohol content of the beer-flavored beverage, the more easily the effect is felt.

In the beer-flavored beverage according to an aspect of the present invention, the real extract concentration may be, from the viewpoint of obtaining a beer-flavored beverage (in particular, a high alcohol content beer-flavored beverage) in which an unsuitable smell of alcohol is suppressed and suitable rich flavor and thickness are improved, 10.5 (w/w)% or more, 10.8 (w/w)% or more, 11.0 (w/w)% or more, 11.3 (w/w)% or more, 11.5 (w/w)% or more, 11.8 (w/w)% or more, 12.0 (w/w)% or more, 12.3 (w/w)% or more, 12.5 (w/w)% or more, 12.8 (w/w)% or more, 13.0 (w/w)% or more, 13.3 (w/w)% or more, 13.5 (w/w)% or more, 13.8 (w/w)% or more, 14.0 (w/w)% or more, 14.3 (w/w)% or more, 14.5 (w/w)% or more, 14.8 (w/w)% or more, 15.0 (w/w)% or more, 15.3 (w/w)% or more, 15.5 (w/w)% or more, 15.8 (w/w)% or more, 16.0 (w/w)% or more, 16.3 (w/w)% or more, 16.5 (w/w)% or more, 16.8 (w/w)% or more, 17.0 (w/w)% or more, 17.3 (w/w)% or more, 17.5 (w/w)% or more, 17.8 (w/w)% or more, or 18.0 (w/w)% or more, and it may be 40.0 (w/w)% or less, 37.0 (w/w)% or less, 35.0 (w/w)% or less, 32.0 (w/w)% or less, 30.0 (w/w)% or less, 29.0 (w/w)% or less, 28.0 (w/w)% or less, 27.0 (w/w)% or less, 26.0 (w/w)% or less, 25.0 (w/w)% or less, 24.0 (w/w)% or less, 23.0 (w/w)% or less, 22.0 (w/w)% or less, 21.0 (w/w)% or less, 20.0 (w/w)% or less, 19.5 (w/w)% or less, 19.0 (w/w)% or less, 18.5 (w/w)% or less, 18.0 (w/w)% or less, 17.5 (w/w)% or less, 17.0 (w/w)% or less, 16.5 (w/w)% or less, 16.0 (w/w)% or less, 15.5 (w/w)% or less, 15.0 (w/w)% or less, 14.5 (w/w)% or less, 14.0 (w/w)% or less, 13.5 (w/w)% or less, 13.0 (w/w)% or less, or 12.5 (w/w)% or less.

The real extract concentration can be measured in accordance with the method described in "8.4.3 Alcolyzer method" in Revised BCOJ Beer Analysis Method, Enlarged and Revised Edition of 2013 (edited by [Analysis Committee] Brewery Convention of Japan, Brewers Association of Japan, published by Public Interest Incorporated Foundation, Brewing Society of Japan).

The real extract concentration can be adjusted by appropriately setting the addition of diluting water or carbonated water, the types of raw materials (such as malt, corn grits, and sugar solution), the pulverized grain size of malt, the pulverization mode of malt (such as wet pulverization and dry pulverization), the humidity at the time of pulverization of malt (extent of humidity adjustment), the temperature at the time of pulverization, the type of mill used at the time of pulverization, the amounts of raw materials, the type of enzyme, the amount of enzyme added, the timing of enzyme addition, the enzyme decomposition time, the saccharification time in a preparation tank, the time for proteolysis in the preparation tank, the pH in the preparation tank, the pH in a preparation step (wort production step from feeding of malt until before addition of yeast), the amount of the acid to be added used in the pH adjustment, the timing of the pH adjustment (such as at the time of preparation, fermentation. or completion of fermentation, before beer filtration, and after beer filtration), the set temperature and holding time in each temperature region in preparation of wort (including during saccharification), the wort filtration time, the temperature during the wort filtration, the pH during the wort filtration, the wort collection amount in the wort filtration, the amount of sparging water during the wort filtration, the pH of sparging water during the wort filtration, the temperature of sparging water during the wort filtration, the fermentation conditions (such as the oxygen concentration, aeration conditions, yeast species, amount of yeast added, the number of yeast grown, the removal timing of yeast, fermentation temperature, fermentation time, pressure setting, and carbon dioxide concentration), the addition of a spirit, a distilled alcohol or the like, and the like.

In the beer-flavored beverage according to an aspect of the present invention, from the viewpoint of obtaining a beer-flavored beverage (in particular, high alcohol content beer-flavored beverage) in which an unsuitable smell of alcohol is suppressed and suitable rich flavor and thickness are improved, the ethyl caprylate content is preferably 25 ppb by mass or more, 30 ppb by mass or more, 35 ppb by mass or more, 40 ppb by mass or more, 45 ppb by mass or more, 50 ppb by mass or more, 55 ppb by mass or more, 60 ppb by mass or more, 65 ppb by mass or more, 70 ppb by mass or more, 75 ppb by mass or more, 80 ppb by mass or more, 85 ppb by mass or more, 90 ppb by mass or more, 95 ppb by mass or more, 100 ppb by mass or more, 110 ppb by mass or more, 120 ppb by mass or more, 130 ppb by mass or more, 140 ppb by mass or more, 150 ppb by mass or more, 160 ppb by mass or more, 170 ppb by mass or more, 180 ppb by mass or more, 190 ppb by mass or more, 200 ppb by mass or more, 210 ppb by mass or more, 220 ppb by mass or more, 230 ppb by mass or more, 240 ppb by mass or more, 250 ppb by mass or more, 260 ppb by mass or more, 270 ppb by mass or more, 280 ppb by mass or more, 290 ppb by mass or more, 300 ppb by mass or more, 310 ppb by mass or more, 320 ppb by mass or more, 330 ppb by mass or more, 340 ppb by mass or more, 350 ppb by mass or more, 360 ppb by mass or more, 370 ppb by mass or more, 380 ppb by mass or more, 390 ppb by mass or more, 400 ppb by mass or more, 410 ppb by mass or more, 420 ppb by mass or more, 430 ppb by mass or more, 440 ppb by mass or more, 450 ppb by mass or more, 460 ppb by mass or more, 470 ppb by mass or more, 480 ppb by mass or more, 490 ppb by mass or more, 500 ppb by mass or more, 520 ppb by mass or more, 540 ppb by mass or more, 560 ppb by mass or more, 580 ppb by mass or more, 600 ppb by mass or more, 620 ppb by mass or more, 640 ppb by mass or more, 660 ppb by mass or more, 680 ppb by mass or more, 700 ppb by mass or more, 720 ppb by mass or more, 740 ppb by mass or more, 750 ppb by mass or more, 760 ppb by mass or more, 780 ppb by mass or more, 800 ppb by mass or more, 850 ppb by mass or more, 900 ppb by mass or more, 950 ppb by mass or more, 1000 ppb by mass or more, 1050 ppb by mass or more, 1100 ppb by mass or more, 1150 ppb by mass or more, or 1200 ppb by mass or more, and it may be 3000 ppb by mass or less, 2900 ppb by mass or less, 2800 ppb by mass or less, 2700 ppb by mass or less, 2600 ppb by mass or less, 2500 ppb by mass or less, 2400 ppb by mass or less, 2300 ppb by mass or less, 2200 ppb by mass or less, 2100 ppb by mass or less, 2000 ppb by mass or less, 1950 ppb by mass or less, 1900 ppb by mass or less, 1850 ppb by mass or less, 1800 ppb by mass or less, 1750 ppb by mass or less, 1700 ppb by mass or less, 1650 ppb by mass or less, 1600 ppb by mass or less, 1550 ppb by mass or less, 1500 ppb by mass or less, 1450 ppb by mass or less, 1400 ppb by mass or less, 1350 ppb by mass or less, 1300 ppb by mass or less, 1250 ppb by mass or less, 1200 ppb by mass or less, 1150 ppb by mass or less, 1000 ppb by mass or less, 950 ppb by mass or less, 900 ppb by mass or less, 850 ppb by mass or less, 800 ppb by mass or less, 750 ppb by mass or less, or 700 ppb by mass or less,

In the present specification, the ethyl caprylate content can be measured by a known method using GC-MS or the like.

Ethyl caprylate contained in the beer-flavored beverage according to an aspect of the present invention may be derived from a raw material of the beer-flavored beverage, or may be separately added in a production step (for example, ethyl caprylate purified product).

The adjustment of specific ethyl caprylate content in the beer-flavored beverage according to an aspect of the present invention can be performed by appropriately setting: the addition of an ethyl caprylate purified product; the type of ethyl caprylate-containing raw material (such as barley/wheat, malt, corn grits, sugar solution, yeast extract, soybean, or pea); the type of raw materials originated from ethyl caprylate (such as barley/wheat, malt, corn grits, sugar solution, yeast extract, soybean, or pea); the amount of raw materials; the enzyme reaction time in a preparation step (wort production step from feeding of a raw material such as malt until before addition of yeast); the pH in a preparation step; the added amount of acid used in pH adjustment; the timing for pH adjustment (during preparation, during fermentation, at completion of fermentation, before beverage filtration, after beverage filtration, or the like); the set temperature and holding time in each temperature region in preparation of wort (including during saccharification); the original extract concentration of a pre-beverage liquid (pre-fermentation liquid); the original extract concentration in a fermentation step; the fermentation conditions (such as the oxygen concentration, aeration conditions, yeast species, amount of yeast added, the number of yeast grown, removal timing of yeast, fermentation temperature, fermentation time, pressure setting, and carbon dioxide concentration); or the like.

When the ethyl caprylate content is reduced, the content can be adjusted by adding diluting water, carbonated water, spirits, brewed alcohol, or the like.

In the beer-flavored beverage according to an aspect of the present invention, from the viewpoint of obtaining a beer-flavored beverage (in particular, high alcohol content beer-flavored beverage) in which an unsuitable smell of alcohol is suppressed and rich flavor and thickness are further improved while having an appropriate sensation of irritation of alcohol, the ratio of the real extract concentration (unit: (w/w)%) to the alcohol content (unit: (v/v)%), [the real extract concentration/the alcohol content], is preferably 0.10 or more, 0.12 or more, 0.14 or more, 0.16 or more, 0.18 or more, 0.20 or more, 0.22 or more 0.24 or more, 0.26 or more 0.28 or more, 0.30 or more, 0.32 or more, 0.34 or more, 0.36 or more, 0.38 or more, 0.40 or more, 0.42 or more, 0.44 or more, 0.46 or more, 0.48 or more, 0.50 or more, 0.52 or more, 0.54 or more, 0.56 or more, 0.58 or more, 0.60 or more, 0.62 or more, 0.64 or more, 0.66 or more, 0.68 or more, 0.70 or more, 0.80 or more, 0.90 or more, or 1.00 or more, and it may be 5.00 or less, 4.70 or less, 4.50 or less, 4.30 or less, 4.00 or less, 3.70 or less, 3.50 or less, 3.30 or less, 3.00 or less, 2.70 or less, 2.50 or less, 2.30 or less, 2.00 or less, 1.90 or less, 1.80 or less, 1.70 or less, 1.60 or less, 1.50 or less, 1.40 or less, 1.30 or less, 1.20 or less, 1.10 or less, or 1.00 or less.

In the beer-flavored beverage according to an aspect of the present invention, from the viewpoint of obtaining a beer-flavored beverage (in particular, high alcohol content beer-flavored beverage) in which an unsuitable smell of alcohol is suppressed and rich flavor and thickness are further improved while having an appropriate sensation of irritation of alcohol, the ratio of the ethyl caprylate content (unit: ppb by mass) to the alcohol content (unit: (v/v)%), [the ethyl caprylate content/the alcohol content], may be 1.0 or more, 1.2 or more, 1.4 or more, 1.6 or more, 1.8 or more, 2.0 or more, 2.2 or more, 2.4 or more 2.6, or more, 2.8 or more, 3.0 or more, 3.2 or more, 3.4 or more, 3.6 or more, 3.8 or more, 4.0 or more, 4.2 or more, 4.4 or more, 4.6 or more, 4.8 or more, 5.0 or more, 5.2 or more, 5.4 or more, 5.6 or more, 5.8 or more, 6.0 or more, 6.2 or more, 6.4 or more, 6.6 or more, 6.8 or more, 7.0 or more, 7.5 or more, 8.0 or more, 8.5 or more, 9.0 or more, 9.5 or more, 10.0 or more, 12.0 or more, 14.0 or more, 15.0 or more, 16.0 or more, 18.0 or more, 20.0 or more, 22.0 or more, 24.0 or more, 25.0 or more, 26.0 or more, 28.0 or more, 30.0 or more, 32.0 or more, 34.0 or more, 35.0 or more, 36.0 or more, 38.0 or more, 40.0 or more, 42.0 or more, 44.0 or less, 45.0 or less, 46.0 or more, 48.0 or more, 50.0 or more, 52.0 or more, 54.0 or less, 55.0 or less, 56.0 or more, 58.0 or less, 60.0 or more, 65.0 or less, 70.0 or more, 75.0 or more, 80.0 or more, 85.0 or more, 90.0 or more, 95.0 or more, 100.0 or more, 105.0 or more, or 110.0 or more, and it may be 400.0 or less, 380.0 or less, 360.0 or less, 350.0 or less, 340.0 or less, 320.0 or less, 300.0 or less, 280.0 or less, 260.0 or less, 250.0 or less, 240.0 or less, 220.0 or less, 200.0 or less, 190.0 or less, 180.0 or less, 170.0 or less, 160.0 or less, 150.0 or less, 140.0 or less, 135.0 or less, 130.0 or less, 125.0 or less, 120.0 or less, 115.0 or less, 110.0 or less, 105.0 or less, 100.0 or less, 95.0 or less, 90.0 or less, 85.0 or less, 80.0 or less, 75.0 or less, 70.0 or less, 65.0 or less, 60.0 or less, 55.0 or less, 50.0 or less, 45.0 or less, 40.0 or less, 35.0 or less, 30.0 or less, 25.0 or less, or 20.0 or less.

In the beer-flavored beverage according to an aspect of the present invention, from the viewpoint of obtaining a beer-flavored beverage (in particular, high alcohol content beer-flavored beverage) in which an unsuitable smell of alcohol is suppressed and rich flavor and thickness are further improved while having an appropriate sensation of irritation of alcohol, the ratio of the ethyl caprylate content (unit: ppb by mass) to the real extract concentration (unit: (w/w)%), [the ethyl caprylate content/the real extract concentration], may be 2.0 or more, 2.2 or more, 2.4 or more, 2.6 or more, 2.8 or more, 3.0 or more, 3.2 or more, 3.4 or more, 3.6 or more, 3.8 or more, 4.0 or more, 4.2 or more, 4.4 or more, 4.6 or more, 4.8 or more, 5.0 or more, 5.2 or more, 5.4 or more, 5.6 or more, 5.8 or more, 6.0 or more, 6.2 or more, 6.4 or more, 6.6 or more, 6.8 or more, or more, 7.0 or more, 7.5 or more, 8.0 or more, 8.5 or more, 9.0 or more, 9.5 or more, 10.0 or more, 12.0 or more, 14.0 or more, 15.0 or more, 16.0 or more, 18.0 or more, 20.0 or more, 22.0 or more, 24.0 or more, 25.0 or more, 26.0 or more, 28.0 or more, 30.0 or more, 32.0 or more, 34.0 or more, 35.0 or more, 36.0 or more, 38.0 or more, 40.0 or more, 42.0 or more, 44.0 or more, 45.0 or more, 46.0 or more, 48.0 or more, 50.0 or more, 52.0 or more, 54.0 or more, 55.0 or more, 56.0 or more, 58.0 or more, 60.0 or more, 65.0 or more, 70.0 or more, 75.0 or more, 80.0 or more, 85.0 or more, or 90.0 or more, and it may be 400.0 or less, 380.0 or less, 360.0 or less, 350.0 or less, 340.0 or less, 320.0 or less, 300.0 or less, 280.0 or less, 260.0 or less, 250.0 or less, 240.0 or less, 220.0 or less, 200.0 or less, 190.0 or less, 180.0 or less, 170.0 or less, 160.0 or less, 150.0 or less, 140.0 or less, 135.0 or less, 130.0 or less, 125.0 or less, 120.0 or less, 115.0 or less, 110.0 or less, 105.0 or less, 100.0 or less, 95.0 or less, 90.0 or less, 85.0 or less, 80.0 or less, 75.0 or less, 70.0 or less, 65.0 or less, 60.0 or less, 55.0 or less, 50.0 or less, 45.0 or less, 40.0 or less, 35.0 or less, 30.0 or less, 25.0 or less, or 20.0 or less.

In the beer-flavored beverage according to an aspect of the present invention, from the viewpoint of obtaining a beer-flavored beverage (in particular, high alcohol content beer-flavored beverage) having a suitable tight feeling, the bitterness unit may be 1.0 BUs or more, 2.0 BUs or more, 3.0 BUs or more, 5.0 BUs or more, 7.0 BUs or more, 10.0 BUs or more, 12.0 BUs or more, 15.0 BUs or more, 17.0 BUs or more, 20.0 BUs or more, 22.0 BUs or more, 25.0 BUs or more, 27.0 BUs or more, 30.0 BUs or more, 32.0 BUs or more, 35.0 BUs or more, 37.0 BUs or more, or 40.0 BUs or more, and it may be 500 BUs or less, 450 BUs or less, 400 BUs or less, 350 BUs or less, 300 BUs or less, 270 BUs or less, 250 BUs or less, 220 BUs or less, 200 BUs or less, 190 BUs or less, 180 BUs or less, 170 BUs or less, 160 BUs or less, 150 BUs or less, 140 BUs or less, 130 BUs or less, 120 BUs or less, 110 BUs or less, 100 BUs or less, 95 BUs or less, or 90 BUs or less.

In addition, in a case where the beer-flavored beverage according to an aspect of the present invention does not use hop as a base material, the bitterness unit may be less than 7.0 BUs, less than 6.0 BUs, less than 5.0 BUs, less than 4.0 BUs, less than 3.0 BUs, less than 2.0 BUs, less than 1.0 BUs, less than 0.5 BUs, or less than 0.1 BUs.

In the present specification, the "bitterness unit" of the beverage can be measured by the measurement method described in "8.15 Bitterness Unit" in Revised BCOJ Beer Analysis Method (published by Public Interest Incorporated Foundation, The Brewing Society of Japan, edited by Analysis Committee, Brewery Convention of Japan, Brewers Association of Japan, Enlarged and Revised Edition of 2013).

The bitterness unit of the beer-flavored beverage according to an aspect of the present invention is an index of the bitterness imparted by a hop-derived component containing isohumulone as a main component, and can be controlled by, for example, appropriately adjusting the type, amount, and addition timing of hops.

In the beer-flavored beverage according to an aspect of the present invention, a sugar content may be 0.5 g/100 mL or more, 0.6 g/100 mL or more, 0.7 g/100 mL or more, 0.8 g/100 mL or more, 0.9 g/100 mL or more, 1.0 g/100 mL or more, 1.1 g/100 mL or more, 1.2 g/100 mL or more, 1.3 g/100 mL or more, 1.4 g/100 mL or more, 1.5 g/100 mL or more, 1.6 g/100 mL or more, 1.7 g/100 mL or more, 1.8 g/100 mL or more, 1.9 g/100 mL or more, or 2.0 g/100 mL or more, and may be 5.0 g/100 mL or less, 4.7 g/100 mL or less, 4.5 g/100 mL or less, 4.2 g/100 mL or less, 4.0 g/100 mL or less, 3.9 g/100 mL or less, 3.8 g/100 mL or less, 3.7 g/100 mL or less, 3.6 g/100 mL or less, 3.5 g/100 mL or less, 3.4 g/100 mL or less, 3.3 g/100 mL or less, 3.2 g/100 mL or less, 3.1 g/100 mL or less, or 3.0 g/100 mL or less.

Note that the sugar content can be adjusted by appropriately setting the addition of diluting water or carbonated water, the types of raw materials (such as malt, corn grits, and sugar solution), the amounts of raw materials, the type of enzyme, the amount of enzyme added (also including a saccharolytic enzyme or an isomerase), the timing of enzyme addition, the saccharification time, the pH during saccharification, the pH in the preparation step (wort production step from feeding of malt until before addition of yeast), the time for wort filtration, the set temperature and holding time in each temperature region in preparation of wort (including during saccharification), the original extract concentration in the pre-fermentation liquid, the original extract concentration in the fermentation step, the fermentation conditions (such as the oxygen concentration, aeration conditions, yeast species, amount of yeast added, the number of yeast grown, removal timing of yeast, fermentation temperature, fermentation time, pressure setting, carbon dioxide concentration, amount of enzyme added, type of enzyme, and addition timing of enzyme), and the like.

In addition, the "sugar" in the present specification refers to a sugar based on the Nutrition Labeling Standards for Foods (Ministry of Health, Labour and Welfare Notification No. 176, 2003, Consumer Affairs Agency Notification No. 8, Partial Revision, September 27, 2013) and specifically means a material in which protein, lipid, dietary fiber, ash, alcohol content, and water have been removed from the target food. Thus, the amount of sugar in a food can be calculated by subtracting the amounts of protein, lipid, dietary fiber, ash, and water from the weight of the food.

Here, the amounts of protein, lipid, dietary fiber, ash, and water can be measured by the methods described in the Nutrition Labeling Standards. Specifically, the amount of protein can be measured by a method of quantitative conversion of nitrogen, the amount of lipid can be measured by an ether extraction method, the amount of dietary fiber can be measured by the Prosky method, the amount of ash can be measured by a direct ashing method, and the amount of water can be measured by a method of heating and drying under reduced pressure.

In the beer-flavored beverage according to an aspect of the present invention, an apparent fermentation degree may be 56% or more, 58% or more, 60% or more, 62% or more, 65% or more, 67% or more, 70% or more, 72% or more, 75% or more, 77% or more, 80% or more, 82% or more, 85% or more, 87% or more, 90% or more, 92% or more, 95% or more, 97% or more, 100% or more, or 105% or more, and may be 120% or less, 119% or less, 118% or less, 117% or less, 116% or less, 115% or less, 114% or less, 113% or less, 112% or less, 111% or less, or 110% or less.

Note that the apparent fermentation degree can be adjusted by appropriately setting the addition of diluting water or carbonated water, the types of raw materials (such as malt, corn grits, and sugar solution), the amounts of raw materials, the type of enzyme, the amount of enzyme added (also including a saccharolytic enzyme or an isomerase), the temperature in enzymatic reaction, the timing of enzyme addition, the saccharification time, the pH during saccharification, the temperature during saccharification, the pH in the preparation step (wort production step from feeding of malt until before addition of yeast), the temperature in the preparation step, the time for wort filtration, the set temperature and holding time in each temperature region in preparation of wort (including during saccharification), the original extract concentration in the pre-fermentation liquid, the original extract concentration in the fermentation step, the fermentation conditions (such as the oxygen concentration, aeration conditions, yeast species, amount of yeast added, the number of yeast grown, removal timing of yeast, fermentation temperature, fermentation time, pressure setting, carbon dioxide concentration, amount of enzyme added, type of enzyme, and timing of enzyme addition), and the like.

In the present specification, the "apparent fermentation degree" means the proportion of the concentration of sugar that can be consumed by yeast as a nutrient source for alcoholic fermentation to the total concentration of sugar contained in the pre-fermentation liquid. For example, the apparent fermentation degree AA of the beer-flavored beverage can be calculated from Formula (1) below.

$$\text{Formula (1): } AA\ (\%) = 100 \times (P - Es)/P$$

In Formula (1) set forth above, "P" is an original extract (original wort extract) and can be measured by the method described in the "BCOJ Beer Analysis Method" (published by The Brewing Society of Japan, edited by Brewers Association of Japan, Revised on November 1, 2004).

"Es" represents an apparent extract of the beer-flavored beverage. The apparent extract can be calculated, for example, from Formula (2) set forth below as described in the "BCOJ Beer Analysis Method" (published by The Brewing Society of Japan, edited by Brewers Association of Japan, Revised on November 1, 2004).

$$\text{Formula (2): } Es = -460.234 + 662.649 \times D - 202.414 \times D2$$

In Formula (2), D is the specific gravity of a degassed beer-flavored beverage.

The apparent extract "Es" may have a negative value depending on D in Formula (2), and thus the calculated apparent fermentation degree may be more than 100%.

The malt proportion of the beer-flavored beverage according to an aspect of the present invention may be 5 mass% or more, 10 mass% or more, 20 mass% or more, 30 mass% or more, 40 mass% or more, 50 mass% or more, 55 mass% or more, 60 mass% or more, 65 mass% or more, 66 mass% or more, more than 66 mass%, 67 mass% or more, 70 mass% or more, 75 mass% or more, 80 mass% or more, 85 mass% or more, 90 mass% or more, 95 mass% or more, or 100 mass%, and may be 100 mass% or less, less than 100 mass%, 98 mass% or less, 95 mass% or less, 90 mass% or less, 85 mass% or less, 80 mass% or less, 75 mass% or less, 70 mass% or less, 68 mass% or less, 67 mass% or less, or 66 mass% or less.

In the present specification, the "malt proportion" means a value calculated according to the Interpretation Notice on the Liquor Tax Law and the Administrative Ordinance Related to Alcoholic Beverages and the like enforced on April 1, 2018.

Note that in a case of suppressing the malt proportion, it is preferable to increase amounts of base materials (carbon source and nitrogen source) other than malt, which can be utilized by yeast. Examples of the carbon source as the yeast assimilable base material include monosaccharides, disaccharides, trisaccharides, and sugar solutions thereof; examples of nitrogen sources as the yeast assimilable raw material include yeast extracts, soybean proteins, malt, soybeans, yeast extracts, peas, wheat malt, ungerminated cereal grains, and decomposition products thereof. Examples of the ungerminated cereal grains include ungerminated barley, ungerminated wheat, ungerminated rye, ungerminated wild oat, ungerminated oat, ungerminated adlay, and ungerminated common oat, ungerminated rice (such as white rice and brown rice), ungerminated maize, ungerminated kaoliang, ungerminated potato, ungerminated beans (such as soybeans and peas), ungerminated buckwheat, ungerminated sorghum, ungerminated foxtail millet, and ungerminated barnyard millet. In addition, starches collected from these grains and extracts thereof may be used.

The beer-flavored beverage according to an aspect of the present invention may be beer.

In the present specification, the term "beer" means a beverage produced by using malt, hops, and water as base materials and fermenting them with yeast, and specifically means one defined by the Interpretation Notice on the Liquor Tax Law and the Administrative Ordinance Related to Alcoholic Beverages and the like enforced on April 1, 2018.

That is, in a case where the beer-flavored beverage according to an aspect of the present invention is beer, the alcohol content is adjusted by the fermentation step using yeast.

The color of the beer-flavored beverage according to an aspect of the present invention is not particularly limited, and may be amber or golden like ordinary beer, black like dark beer, or colorless and transparent, or may be colored as desired by adding a coloring agent or the like. The color of the beer-flavored beverage can be determined by the naked eye, but may be defined by the total light transmittance, color scale, or the like.

The color scale of the beer-flavored beverage according to an aspect of the present invention may be 0.5 EBC or more, 1.0 EBC or more, 2.0 EBC or more, 3.0 EBC or more, 5.0 EBC or more, 7.0 EBC or more, 10 EBC or more, 15 EBC or more, 20 EBC or more, 25 EBC or more, 30 EBC or more, 35 EBC or more, 40 EBC or more, 45 EBC or more, 50 EBC or more, 55 EBC or more, 60 EBC or more, 65 EBC or more, 70 EBC or more, 75 EBC or more, 80 EBC or more, 85 EBC or more, 90 EBC or more, 95 EBC or more, 100 EBC or more, 105 EBC or more, 110 EBC or more, 115 EBC or more, 120 EBC or more, 125 EBC or more, 130 EBC or more, 135 EBC or more, 145 EBC or more, or 150 EBC or more, and may be 500 EBC or less, 450 EBC or less, 400 EBC or less, 350 EBC or less, 300 EBC or less, 270 EBC or less, 250 EBC or less, 240 EBC or less, 230 EBC or less, 220 EBC or less, 210 EBC or less, 200 EBC or less, 190 EBC or less, 180 EBC or less, 170 EBC or less, 160 EBC or less, 155 EBC or less, 150 EBC or less, 145 EBC or less, 140 EBC or less, 135 EBC or less, 130 EBC or less, 125 EBC or less, 120 EBC or less, 115 EBC or less, 110 EBC or less, 105 EBC or less, 100 EBC or less, 95 EBC or less, 90 EBC or less, 85 EBC or less, 80 EBC or less, 75 EBC or less, or 70 EBC or less.

In the present specification, the "Color Scale" of the beer-flavored beverage can be measured by the measurement method described in "8.8 Color Scale" in Revised BCOJ Beer Analysis Method (published by Public Interest Incorporated Foundation, The Brewing Society of Japan, edited by Analysis Committee, Brewery Convention of Japan, Brewers Association of Japan, Enlarged and Revised Edition of 2013). The "color scale" of the beer-flavored beverage is specified by the unit of color scale (EBC unit) defined by the European Brewery Convention. A beverage with a smaller numerical value has a lighter and brighter color, whereas a beverage with a larger numerical value has a deeper and darker color.

In addition, the color scale of the beer-flavored beverage according to an aspect of the present invention can be controlled, for example, by appropriately adjusting the type of malt used, the blending proportion in a case of using two or more types of malts in combination, or the boiling conditions for preparation of the pre-fermentation liquid. More specifically, for example, to increase the color scale of the beer-flavored beverage, the color scale can be adjusted by increasing the blending proportion of dark malt as the malt, increasing the temperature during boiling treatment, increasing boiling time, performing decoction during preparation of a saccharified liquid, adding a color additive such as caramel color additive, and the like. Further, the color scale can also be adjusted to a higher level by increasing the original wort extract concentration or increasing the malt proportion. Further, the color scale can also be adjusted to a higher level by increasing the original extract concentration or the real extract concentration, or increasing the malt proportion.

The pH of the beer-flavored beverage according to an aspect of the present invention is preferably 2.0 or more, 2.2 or more, 2.4 or more, 2.6 or more, 2.8 or more, 3.0 or more, 3.1 or more, 3.2 or more, 3.3 or more, 3.4 or more, 3.5 or more, 3.6 or more, 3.7 or more, 3.8 or more, 3.9 or more, or 4.0 or more, and preferably 5.4 or less, 5.2 or less, 5.0 or less, 4.9 or less, 4.8 or less, 4.7 or less, 4.6 or less, 4.55 or less, or 4.5 or less.

The beer-flavored beverage according to an aspect of the present invention may be in a state where the beverage is filled in a container. Examples of the container include a bottle, a PET bottle, a can, a bottle can, and a barrel. In particular, from the viewpoint of easy portability, the container is preferably a bottle, a PET bottle, a can, or a bottle can.

1.1 Raw material

As the main raw material of the beer-flavored beverage of an aspect of the present invention, malt may be used together with water, or malt does not need to be used. Furthermore, the beer-flavored beverage according to an aspect of the present invention may be a beverage using hops as a raw material, or may be a beverage not using hops.

Besides, a preservative, a sweetener, a water-soluble dietary fiber, a bittering agent or bitterness-imparting agent, an antioxidant, a flavoring, an acidulant, a salt, and/or the like may be used.

1.1.1 Malt, grain other than malt

In a case where malt is used as the raw material, the malt refers to malt prepared by germinating seeds of barley or the like, such as barley, wheat, rye, common wild oat, oat, adlay, or oat, drying the germinated seeds, and removing roots, and may be from any production area and of any variety.

The malt used in an aspect of the present invention is preferably barley malt. Barley malt is one of the malts most commonly used as a base material for Japanese beer-flavored beverages. Examples of barley include two-rowed barley and six-rowed barley, and any of them may be used. Furthermore, besides normal malts, colored malts and the like can also be used. When colored malt is used, different types of colored malts may be appropriately used in combination, or one colored malt may be used.

Note that in the beer-flavored beverage according to an aspect of the present invention, the malt to be used is preferably selected as appropriate in accordance with the desired color scale of the beer-flavored beverage, and the malt to be selected may be used alone or in combination of two or more kinds thereof.

In addition to or instead of malt, a grain other than malt may be used.

Examples of such a grain include barley and the like that do not fall under malt (such as barley, wheat, rye, common wild oats, oats, adlay, and oats), rice (such as white rice and brown rice), corn, kaoliang, potato, legumes (such as soybeans and peas), buckwheat, sorghum, foxtail millet, Japanese millet, starch resulting therefrom, and extracts thereof.

Note that in a case of suppressing the malt proportion, or a case of not using malt, it is preferable to increase amounts of base materials (carbon source and nitrogen source) other than malt, which can be utilized by yeast. Examples of the carbon source of the yeast-assimilable base material include monosaccharides, disaccharides, trisaccharides, and sugar solutions thereof, and examples of the nitrogen source include yeast extract, amino acid-containing ingredients (such as soybean protein), soybean, yeast extract, pea, wheat malt, ungerminated grains, and decomposition products thereof.

The beer-flavored beverage according to an aspect of the present invention may be a beverage using wheat malt or a beverage substantially free from wheat malt.

The beer-flavored beverage according to an aspect of the present invention may be a beverage substantially free from soybean peptide having a weight-average molecular weight of less than 10000 as a raw material, or may be a beverage free from the soybean peptide.

The "beverage substantially free from wheat malt" and "beverage substantially free from soybean peptide" means beverages in which the wheat malt or soybean peptide is used in an amount or less than 5.0 mass%, less than 3.0 mass%, less than 2.0 mass%, less than 1.0 mass%, less than 0.10 mass%, less than 0.01 mass%, less than 0.001 mass%, or less than 0.0001 mass%, with respect to the total amount (100 mass%) of base materials excluding water of the beverage.

The fruit, pericarp, bark, leaf, flower, stem, root, and seed of a plant other than plants of the Gramineae family such as barley, which can be used as a raw material, can be appropriately selected.

Specific examples of the plant other than plants of the Gramineae family include citrus fruits, soft fruits, herbs, and spices. Examples of the citrus fruits include an orange, Citrus junos, a lemon, a lime, a mandarin orange, a grapefruit, Citrus Iyo Group, Citrus japonica, Citrus sphaerocarpa, Citrus limetta 'Daidai', Citrus depressa, and Citrus sudachi.

Examples of the soft fruits include a peach, a grape, a banana, an apple, a grape, a pineapple, a strawberry, a pear, a muscat, and a blackcurrant. Examples of the herbs and the spices include coriander, pepper, fennel, Sichuan pepper, zanthoxyli fructus, cardamom, caraway, nutmeg, mace, juniper berry, allspice, vanilla, elderberry, grains of paradise, anise, and star anise.

These may be used as they are, may be used after being crushed, may be used in the form of an extract derived by extraction with an extraction solvent such as water or ethanol, or may be used after being squeezed (fruit juice or the like). One of these herbs and spices may be used alone, or two or more thereof may be used in combination.

The above can be used as appropriate in accordance with the gusto of consumers, but in order to enjoy a clear and refreshing taste like beer, it is preferable that the above citrus fruits, soft fruits, herbs, and spices be not used at all or used in a minimum amount as raw materials. In particular, a blackcurrant gives an inappropriate milky aroma in beer, and thus a blackcurrant or blackcurrant juice is preferably not used at all or used in a minimum amount in the raw material.

1.1.2 Hop

In a case of using hops in an aspect of the present invention, examples of the form of the hops include pellet hops, powdered hops, and hop extract. The hops used may be a processed hop product, such as isomerized hops or reduced hops.

In the case of using hops in an aspect of the present invention, the amount of hops to be added is appropriately adjusted but is preferably from 0.0001 to 1 mass% based on the total amount (100 mass%) of the raw materials for the beverage.

A beer-flavored beverage made using hops as a raw material is a beverage containing iso-$\alpha$-acid, which is a component derived from hops. The content of iso-$\alpha$-acid in the beer-flavored beverage made using hops may be more than 0.1 mass ppm or more than 1.0 mass ppm based on the total amount (100 mass%) of the beer-flavored beverage.

On the other hand, the content of iso-$\alpha$-acid in a beer-flavored beverage made without using hops may be 0.1 mass ppm or less based on the total amount (100 mass%) of the beer-flavored beverage.

In the present specification, the content of iso-$\alpha$-acid means a value measured by the high-performance liquid chromatography (HPLC) analysis method described in Revised BCOJ Beer Analysis Method (published by Public Interest Incorporated Foundation, The Brewing Society of Japan, edited by [Analysis Committee] Brewery Convention of Japan, Brewers Association of Japan, Enlarged and Revised Edition of 2013).

1.1.3 Preservative

The beer-flavored beverage according to an aspect of the present invention may be a beverage having a preservative.

Examples of the preservative used in an aspect of the present invention include benzoic acid; benzoate salts, such as sodium benzoate; benzoate esters, such as propyl parahydroxybenzoate and butyl parahydroxybenzoate; and dimethyl dicarbonate. For the preservative, a commercially available preparation, such as Kyohryoku Sanpurezah (Powerful Sanplezer) (a mixture of sodium benzoate and butyl benzoate, available from San-Ei Gen F.F.I., Inc.) may be used.

One of these preservatives may be used alone, or two or more of these preservatives may be used in combination.

In a case of blending a preservative in the beer-flavored beverage according to an aspect of the present invention, the content of the preservative is preferably 5 to 1200 mass ppm, more preferably 10 to 1100 mass ppm, still more preferably 15 to 1000 mass ppm, and even more preferably 20 to 900 mass ppm.

1.1.4 Sweetener

The beer-flavored beverage according to an aspect of the present invention may be a beverage further containing a sweetener.

Examples of the sweetener used in an aspect of the present invention include saccharified liquid in which starch derived from grain has been degraded with an acid, an enzyme, or the like; saccharides such as commercially available starch syrup; sucrose; tri- or higher saccharides; isomerized sugar; sugar alcohols; natural sweeteners, such as stevia; and artificial sweeteners.

One of these sweeteners may be used alone, or two or more of these sweeteners may be used in combination.

These saccharides may be in the form of a liquid, such as a solution, or a solid, such as a powder.

There are no particular limitations on the type of base material grain for starch, the method of purifying starch, and the conditions for treatment, such as hydrolysis with an enzyme or an acid. For example, a saccharide may be used with the proportion of maltose increased by appropriately setting conditions for hydrolysis with an enzyme or an acid. In addition, sucrose, fructose, glucose, maltose, trehalose, maltotriose, maltotetraose, isomaltose, isomaltotriose, isomaltotetraose, and solutions thereof (sugar solutions) can also be used.

Examples of the artificial sweetener include aspartame, acesulfame potassium (acesulfame K), sucralose, and neotame.

1.1.5 Water-soluble dietary fiber

The beer-flavored beverage according to an aspect of the present invention may be a beverage obtained by further blending a water-soluble dietary fiber, or may be a beverage in which no water-soluble dietary fiber is blended (added).

Examples of the water-soluble dietary fiber include digestion-resistant dextrin, polydextrose, guar gum degradation products, pectin, glucomannan, alginic acid, laminarin, fucoidin, and carrageenan. From the viewpoint of versatility, such as stability and safety, digestion-resistant dextrin or polydextrose is preferred.

Note that the beer-flavored beverage according to an aspect of the present invention may be a beverage in which no digestion-resistant dextrin is blended (added) as a base material. The beer-flavored beverage according to this aspect contains a water-soluble dietary fiber derived from raw materials (for example, malt and the like) without blending (adding) digestion-resistant dextrin. The content of water-soluble dietary fiber derived from raw materials is described in, for example, Standard Tables of Food Composition in Japan 2020 (eighth revised edition).

In the beer-flavored beverage according to an aspect of the present invention, the content of the water-soluble dietary fiber may be, based on the total amount (100 mass%) of the beer-flavored beverage, 0.05 mass% or more, 0.1 mass% or more, 0.15 mass% or more, 0.2 mass% or more, 0.25 mass% or more, 0.3 mass% or more, 0.35 mass% or more, 0.4 mass% or more, 0.5 mass% or more, 0.7 mass% or more, 1.0 mass% or more, 1.5 mass% or more, 2.0 mass% or more, 2.5 mass% or more, or 3.0 mass% or more, and it may be 5.0 mass% or less, 4.5 mass% or less, 4.0 mass% or less, 3.5 mass% or less, 3.0 mass% or less, 2.5 mass% or less, 2.0 mass% or less, less than 1.5 mass%, less than 1.0 mass%, less than 0.75 mass%, less than 0.60 mass%, less than 0.50 mass%, 0.40 mass% or less, 0.35 mass% or less, 0.30 mass% or less, 0.25 mass% or less, 0.20 mass% or less, 0.15 mass% or less, 0.10 mass% or less, or less than 0.10 mass%.

The content of the water-soluble dietary fiber may be adjusted to fall within the above range by adding a commercially available product, or may be adjusted in the production process in such a manner that the content of the dietary fiber derived from a base material such as malt falls within the above range. In a case of adding a commercially available product, when the content of the water-soluble dietary fiber is within the above-described range, powderiness unsuitable for a beer-flavored beverage can be suppressed. In a case of adjusting the content of the dietary fiber in the production process, when the content of the water-soluble dietary fiber is set within the above range, for example, the filterability in wort filtration or beer filtration can be improved to increase the production efficiency.

In the case of adjusting the content of water-soluble dietary fiber in the production process, the content of water-soluble dietary fiber in the beer-flavored beverage according to an aspect of the present invention can be adjusted by adjusting the addition of diluting water or carbonated water, the type of raw materials (such as barley, malt, corn, and sugar solution), the amount of raw material, the type of enzyme, the amount of enzyme added, the timing of enzyme addition (such as during the saccharification step, before addition of yeast, after addition of yeast, and during aging), the set temperature, pH, and holding time in each temperature region in preparing the saccharified liquid, and the like.

1.1.6 Bittering agent and bitterness-imparting agent

The beer-flavored beverage according to an aspect of the present invention may be a beverage further containing one or more selected from the group consisting of a bittering agent and a bitterness-imparting agent.

In the beer-flavored beverage according to an aspect of the present invention, the bitterness is preferably imparted by hops, and a bittering agent or a bitterness-imparting agent indicated below may be used together with hops. Alternatively, the bittering agent or bitterness-imparting agent indicated below may be used instead of hops without using hops.

The bittering agent or bitterness-imparting agent is not particularly limited, and a substance used as a bitterness-imparting agent in ordinary beer and low-malt beer can be used. Examples thereof include rosemary, litchi, caraway, juniper berry, sage, rosemary, Ganoderma sichuanense, bay laurel, quassin, caffeine, absinthin, naringin, Phellodendron amurense, citrus extract, bitter wood extract, coffee extract, tea extract, bitter gourd extract, lotus embryo extract, Aloe arborescens extract, rosemary extract, litchi extract, laurel extract, sage extract, caraway extract, wormwood (Artemisia absinthium) extract, absinthin, and alginic acid.

One of these bittering agents and bitterness-imparting agents may be used alone, or two or more thereof may be used in combination.

1.1.7 Antioxidant

The beer-flavored beverage according to an aspect of the present invention may be a beverage further containing an antioxidant.

The antioxidant is not particularly limited, and a substance used as an antioxidant in ordinary beer and low-malt beer can be used, and examples include ascorbic acid, erythorbic acid, and catechin.

One of these antioxidants may be used alone, or two or more thereof may be used in combination.

### 1.1.8 Flavoring

The beer-flavored beverage according to an aspect of the present invention may be a beverage further containing a flavoring.

The flavoring is not particularly limited, and a general beer flavoring can be used. The beer flavoring contains a flavor component and is used for giving a beer-like flavor.

Examples of the flavor component contained in the beer flavoring include ester and higher alcohol. Specific examples thereof include isoamyl acetate, ethyl acetate, n-propanol, isobutanol, acetaldehyde, ethyl caproate, isoamyl propionate, linalool, geraniol, citral, 4-vinylguaiacol (4-VG), 4-methyl-3-pentenoic acid, 2-methyl-2-pentenoic acid, 1,4-cineole, 1,8-cineole, 2,3-diethyl-5-methylpyrazine, $\gamma$-decanolactone, $\gamma$-undecalactone, ethyl hexanoate, ethyl 2-methyl butyrate, ethyl n-butyrate, myrcene, citral, limonene, maltol, ethyl maltol, phenylacetic acid, furaneol, furfural, methional, 3-methyl-2-butene-1-thiol, 3-methyl-2-butanethiol, diacetyl, ferulic acid, geranic acid, geranylacetate, ethyl butyrate, octanoic acid, decanoic acid, 9-decenoic acid, nonanoic acid, tetradecanoic acid, propanoic acid, 2-methylpropanoic acid, $\gamma$-butyrolactone, 2-aminoacetophenone, ethyl 3-phenylpropionate, 2-ethyl-4-hydroxy-5-methyl-3(2H)-furanone, dimethylsulfone, 3-methylcyclopentan-1,2-dione, 2-methylbutanal, 3-methylbutanal, 2-methyltetrahydrofuran-3-one, 2-acetylfuran, 2-methyltetrahydrofuran-3-one, hexanal, hexanol, cis-3-hexenal, 1-octen-3-ol, $\beta$-eudesmol, 4-mercapto-4-methylpentan-2-one, $\beta$-caryophyllene, $\beta$-myrcene, furfuryl alcohol, 2-ethylpyrazine, 2,3-dimethylpyrazine, 2-methylbutyl acetate, isoamyl alcohol, 5-hydroxymethylfurfural, phenylacetaldehyde, 1-phenyl-3-butene-1-one, trans-2-hexenal, nonanal, and phenethyl alcohol.

The flavoring used in an aspect of the present invention may be used singly or in combination of two or more thereof.

The content of the flavor component such as ester or higher alcohol can be adjusted by separately adding a flavoring containing these flavor components. However, when alcoholic fermentation is involved in the production process, the content may be adjusted by alcoholic fermentation without adding a flavoring or together with addition of a flavoring.

The content of the flavor component such as ester or higher alcohol in a case of involving alcoholic fermentation can be controlled by appropriately setting the addition of diluting water or carbonated water, the sugar composition and amino acid composition of the pre-fermentation liquid before addition of yeast, sugar concentration, amino acid concentration, original extract concentration in the pre-fermentation liquid, yeast species, fermentation conditions (such as oxygen concentration, aeration conditions, yeast species, amount of yeast added, the number of yeast grown, yeast removal timing, fermentation temperature, fermentation time, pressure setting, and carbon dioxide concentration), cooling timing, and the like.

### 1.1.9 Acidulant

The beer-flavored beverage according to an aspect of the present invention may be a beverage further containing an acidulant.

The acidulant is not particularly limited as long as it is a substance with a sour taste, and examples include tartaric acid, phosphoric acid, citric acid, gluconic acid, lactic acid, malic acid, phytic acid, acetic acid, succinic acid, glucono-delta-lactone, and salts thereof.

Among these, the acidulant is preferably at least one selected from the group consisting of tartaric acid, phosphoric acid, citric acid, gluconic acid, lactic acid, malic acid, phytic acid, acetic acid, succinic acid, and salts thereof, more preferably at least one selected from the group consisting of tartaric acid, phosphoric acid, citric acid, lactic acid, acetic acid, and salts thereof, and even more preferably at least one selected from the group consisting of tartaric acid, phosphoric acid, and lactic acid.

One of these acidulants may be used alone, or two or more of these acidulants may be used in combination.

### 1.1.10 Salt

The beer-flavored beverage according to an aspect of the present invention may be a beverage further containing salts.

Examples of the salt include sodium chloride, acid potassium phosphate, acid calcium phosphate, ammonium phosphate, magnesium sulfate, calcium sulfate, potassium metabisulfite, calcium chloride, magnesium chloride, potassium nitrate, ammonium sulfate, potassium chloride, monosodium citrate, disodium citrate, and trisodium citrate.

One of these salts may be used alone, or two or more of these salts may be used in combination.

1.2 Carbon dioxide gas

The beer-flavored beverage according to an aspect of the present invention may be a carbonated beverage containing carbon dioxide gas.

As the carbon dioxide gas contained in the beer-flavored beverage according to an aspect of the present invention, carbon dioxide gas contained in a raw material may be used, or carbon dioxide gas may be dissolved by mixing with carbonated water, addition of carbon dioxide gas, or the like.

Note that the carbon dioxide gas generated in the fermentation step of the beer-flavored beverage can be used as it is, but the amount of the carbon dioxide gas may be adjusted by appropriately adding carbonated water.

The carbon dioxide gas concentration of the beer-flavored beverage according to an aspect of the present invention is preferably 0.30 (w/w)% or more, more preferably 0.35 (w/w)% or more, still more preferably 0.40 (w/w)% or more, even more preferably 0.42 (w/w)% or more, further more preferably 0.45 (w/w)% or more, still further more preferably 0.47 (w/w)% or more, and particularly preferably 0.50 (w/w)% or more, and preferably 0.80 (w/w)% or less, more preferably 0.70 (w/w)% or less, still more preferably 0.60 (w/w)% or less, even more preferably 0.57 (w/w)% or less, and particularly preferably 0.55 (w/w)% or less.

Note that, in the present specification, the carbon dioxide gas concentration can be measured in a process in which a container that contains a target beverage is immersed in a water tank at 20°C for 30 minutes or longer while shaking the container from time to time so that the temperature of the beverage becomes 20°C, and then the concentration is measured with a gas volume analyzer (e.g., GVA-500 (available from Kyoto Electronics Manufacturing Co., Ltd.) etc.).

In a case where the beer-flavored beverage according to an aspect of the present invention is a packaged beverage, the carbon dioxide gas pressure of the packaged beverage only needs to be appropriately adjusted such that the carbon dioxide gas concentration is in the ranges described above, and may be 5.0 $kg/cm^2$ or less, 4.5 $kg/cm^2$ or less, or 4.0 $kg/cm^2$ or less, and may be 0.20 $kg/cm^2$ or more, 0.50 $kg/cm^2$ or more, or 1.0 $kg/cm^2$ or more. Any of these upper and lower limits may be combined; for example, the carbon dioxide gas pressure of the beverage may be 0.20 $kg/cm^2$ or more and 5.0 $kg/cm^2$ or less, 0.50 $kg/cm^2$ or more and 4.5 $kg/cm^2$ or less, or 1.0 $kg/cm^2$ or more and 4.0 $kg/cm^2$ or less.

In the present specification, the gas pressure refers to the gas pressure in the container except in special cases.

The pressure can be measured by a method well-known to those skilled in the art, for example, using a method in which a sample adjusted to 20°C is fixed to a gas internal pressure meter, the stopcock of the gas internal pressure meter is opened once to release the gas, the stopcock is closed again, the gas internal pressure meter is shaken, and a value when the pointer reaches a certain position is read; or using a commercially available gas pressure measuring instrument.

1.3 Other additives

In the beer-flavored beverage according to an aspect of the present invention, various additives may be added as necessary to the extent that the effects of the present invention are not compromised.

Examples of such additives include coloring agents, foaming agents, fermentation accelerators, yeast extracts, protein-based substances such as peptide-containing substances, and seasonings such as amino acids.

The coloring agent is used to impart a beer-like color to the beverage, and a caramel dye or the like can be used. The foam-forming agent is used to form beer-like foam or to keep the foam of the beverage, and a plant-extracted saponin-based substance, such as soybean saponin and/or quillaja saponin; a plant protein, such as corn and/or soybean; a peptide-containing substance, such as a collagen peptide; a yeast extract; an emulsifiers (sucrose fatty acid ester, glycerin fatty acid ester, lecithin, and/or lysolecithin); and/or the like can be appropriately used.

The fermentation accelerator is used for promoting fermentation by yeasts, and examples thereof include a yeast extract, a bran component such as rice and wheat, a vitamin, and a mineral agent. A single type of fermentation accelerator can be used alone or two or more types may be used in combination.

1.4 Packaged beverage

The beer-flavored beverage according to an aspect of the present invention may be a packaged beverage packaged in a container. For the packaged beverage, a container of any form and material may be used, and examples of the container include a bottle, a can, a bottle can, a barrel, or a PET bottle. In particular, from the viewpoint of easy portability, the container is preferably a can, a bottle can, a bottle, or a PET bottle.

2 Method for producing beer-flavored beverage

A method for producing a beer-flavored beverage according to an aspect of the present invention includes at least the following steps (a) to (c):

· step (a): a step of adjusting and/or confirming an alcohol content of the beer-flavored beverage to be 10.0 (v/v)% or more;

· step (b): a step of adjusting and/or confirming a real extract concentration of the beer-flavored beverage to be 10.5 (w/w)% or more; and

· step (c): a step of adjusting and/or confirming an ethyl caprylate content of the beer-flavored beverage to be 25 ppb by mass or more.

Note that the order of steps (a) to (c) is not particularly limited.

The method for producing a beer-flavored beverage according to an aspect of the present invention is not particularly limited, and may be a method for producing a beer-flavored beverage through a fermentation step or may be a method for producing a beer-flavored beverage without a fermentation step.

Hereinafter, a method for producing a fermented beer-flavored beverage through a fermentation step and a method for producing a non-fermented beer-flavored beverage without a fermentation step will be described.

2.1 Method for producing fermented beer-flavored beverage

As the method for producing a fermented beer-flavored beverage according to an aspect of the present invention, a method through a fermentation step using yeast is exemplified and includes, for example, the following steps (1) to (2):

· step (1): a step of producing a pre-fermentation liquid by performing at least one treatment selected from saccharification treatment, boiling treatment, and solids content removal treatment, using various raw materials; and

· step (2): a step of adding yeasts to the pre-fermentation liquid to allow fermentation.

In the method for producing a fermented beer-flavored beverage according to an aspect of the present invention, the above-described steps (a) to (c) and adjustment of the bitterness unit, the color scale, the sugar content, and the pH can be performed at any one or more timings of the following (A), (I), and (U). In a case where steps (a) to (c) and the adjustment described above can be performed at the same time by performing steps (1) and (2), it is not necessary to separately perform these steps.

· (A): simultaneously with step (1) and/or step (2)
· (I): between step (1) and step (2)
· (U): after step (2)

Note that step (a) may be performed while performing the fermentation step in step (2), and if needed, spirits and the like, can be added after step (2).

Step (b) may be performed while performing steps (1) and (2), and if needed, a dietary fiber, a saccharide (starch, sweetener, carbohydrate, and the like), and the like, can be added after step (2).

Step (c) may be performed while performing steps (1) and (2), and if needed, an ethyl caprylate purified product and the like can be added after step (2).

Hereinafter, each step of the method for producing a fermented beer-flavored beverage according to an aspect of the present invention will be described.

2.1.1 Step (1)

Step (1) is a step of obtaining a pre-fermentation liquid by performing, using various raw materials, at least one treatment selected from saccharification treatment, boiling treatment, and solids content removal treatment.

For example, in a case of using malt for the various raw materials, various raw materials including water and malt are fed into a preparation kettle or a preparation tank, and an enzyme such as amylase is added, as necessary. Examples of the various raw materials that may be added besides malt include hops, a preservative, a sweetener, a water-soluble dietary fiber, a bittering agent or bitterness-imparting agent, an antioxidant, a flavoring, an acidulant, a color additive, and/or the like. These may be added before performing the saccharification treatment, during the saccharification treatment, or after completion of the saccharification treatment. In addition, these may be added in the next step after the fermentation.

A mixture of the various raw materials is heated to saccharify the starch of the raw materials, and saccharification treatment is performed.

The temperature and time of the saccharification treatment are preferably appropriately adjusted in view of the type of malt used, the malt proportion, raw materials besides water and malt, the type and amount of the enzyme used, the original wort extract concentration of the finally resulting beverage, and the like. In an aspect of the present invention, from the viewpoint of adjusting the sugar concentration and turbidity of the beer-flavored beverage to the above ranges, the temperature of the saccharification treatment is preferably from 55 to 75°C, and the time of the saccharification treatment is preferably from 30 to 240 minutes.

The saccharified liquid is preferably subjected to boiling treatment.

In a case where hops, a bittering agent, and the like are used as raw materials, they are preferably added at the time when this boiling treatment is carried out. Hops, a bittering agent, and/or the like may be added between the start of boiling the saccharified liquid and before the completion of the boiling.

After completion of the boiling treatment, it is preferable that the liquid be transferred to a whirlpool and cooled to 0 to 23°C to form a cooled liquid, and then a treatment for removing solids content such as coagulated protein be performed. With this treatment, the original wort extract concentration can be adjusted to the above range. In this way, a pre-fermentation liquid is prepared.

Note that in this step, there may be performed a filtration through a filter having a predetermined pore diameter (e.g., a pore diameter less than 30 $\mu$m) to perform a process for removing the solids content.

In place of the saccharified liquid, a malt extract added with hot water may be used, and this liquid is added with hops, a bittering agent and the like and then subjected to boiling treatment to prepare a pre-fermentation liquid.

In addition, when malt is not used as the various raw materials, a pre-fermentation liquid may be prepared by mixing a liquid sugar containing a carbon source; a nitrogen source as an amino acid-containing base material other than barley and the like or malt; hops; a dietary fiber; a preservative; a sweetener; an antioxidant; a bitterness-imparting agent; a flavoring; an acidulant; a color additive; and/or the like together with warm water to prepare a liquid sugar solution and by subjecting the liquid sugar solution to boiling treatment.

In the case of using hops, the hops may be added before the boiling treatment or may be added between the start of boiling the liquid sugar solution and before the completion of the boiling.

<u>2.1.2 Step (2)</u>

Step (2) is a step of adding yeasts to the pre-fermentation liquid obtained in step (1) to perform fermentation.

The yeast used in this step can be appropriately selected in view of the type of the fermented beverage to be produced, the target flavor, the fermentation conditions, and the like, and top-fermenting yeast may be used, or bottom-fermenting yeast may be used.

The yeast in the form of a yeast suspension as is may be added to the base material liquid, or a slurry produced by concentrating the yeast by centrifugation or sedimentation may be added to the stock solution. Alternatively, a material obtained by completely removing the supernatant after the centrifugation may be added. The amount of yeast added to the stock solution can be appropriately set and is, for example, approximately from $5.0 \times 10^6$ cells/mL to $1.0 \times 10^9$ cells/mL.

Although the fermentation conditions in performing fermentation can be set as appropriate, the fermentation temperature is preferably from 5 to 25°C from the viewpoint of adjusting the alcohol content and the sugar concentration of the beer-flavored beverage to the ranges described above. The alcohol content and the sugar concentration of the beer-flavored beverage can be adjusted by appropriately setting the type, amount, and timing of addition of the polysaccharide-degrading enzyme such as transglucosidase. They can be also adjusted by changing the temperature (temperature increase or temperature decrease) or pressure of the fermented liquid during the fermentation step as necessary.

After the fermentation, filtration treatment for removing yeast in the beer-flavored beverage may be performed, or filtration treatment does not need to be performed. In addition, water or the above-described various additives may be added as necessary.

The beer-flavored beverage thus produced according to an aspect of the present invention is filled in a predetermined container and distributed to the market as a product.

The method of packaging the beer-flavored beverage is not particularly limited, and a packaging method known to those skilled in the art can be used. Through the packaging step, the beer-flavored beverage according to the present invention is filled and sealed in a container. In the packaging step, a container of any form and material may be used, and examples of the container include containers described in "1.4 Packaged beverage".

<u>2.2 Method for producing non-fermented beer-flavored beverage</u>

A method for producing a non-fermented beer-flavored beverage according to an aspect of the present invention only needs to be a method without the fermentation step, and includes, for example, the following steps (i) to (ii).

· Step (i): a step of obtaining a pre-beverage liquid by subjecting raw materials to at least one treatment selected from saccharification treatment, boiling treatment, or solids content removal treatment.
· Step (ii): a step of cooling the pre-beverage liquid obtained in Step (i) and adding carbon dioxide gas thereto.

Step (i) is the same as the step of producing a pre-fermentation liquid of step (1) in the "method for producing a fermented beer-flavored beverage" described above.

As a method of adding carbon dioxide gas in step (ii), carbon dioxide gas may be added by mixing the cooled pre-beverage liquid formed by cooling the pre-beverage liquid produced in step (i) with carbonated water, or carbon dioxide gas may be directly added to the cooled beverage stock solution. At the same timing as step (ii), additives such as a preservative, a sweetener, a flavoring, an acidulant, and a color additive may be added as necessary in adding carbon dioxide gas.

In the method for producing a non-fermented beer-flavored beverage according to an aspect of the present invention, it is preferable to perform step (a) by blending spirits and the like at least after step (i).

Step (a) may also be performed between step (i) and step (ii), or may be performed in step (i) and step (ii).

Steps (b) and (c) may also be performed between step (i) and step (ii), or may be performed in step (i) and step (ii).

The non-fermented beer-flavored beverage thus produced is filled in a predetermined container and distributed to the market as a product.

The method for packaging the non-fermented beer-flavored beverage is not particularly limited, and a packaging method known to those skilled in the art can be used. Through the packaging step, the non-fermented beer-flavored beverage is filled and sealed in a container. In the packaging step, a container of any form/material may be used, and examples of the container include those described above.

Examples

Hereinafter, the present invention will be described in more detail by examples, but the present invention is not limited by these examples.

Examples 1 to 21 and Comparative Examples 1 to 2

<Preparation of beverage>

Crushed barley malt was fed in a preparation tank containing 40 L of warm water kept at 40 to 55°C, then the temperature was raised to 78°C while the temperature was repeatedly raised and kept in a stepwise manner, then malt dregs were removed by filtration, and a saccharified liquid was produced. Next, hops were further added to the saccharified liquid, boiling was performed, and solid-liquid separation treatment was performed to produce clear wort. Then, brewer's yeast (bottom-fermenting yeast) was added to the pre-fermentation liquid formed by cooling the wort, and the fermentation temperature and the fermentation time were adjusted to perform alcoholic fermentation in such a manner to achieve a predetermined alcohol content. Then, the yeast was removed by filtration to obtain a fermented liquid. As necessary, maltose and/or spirits were added to the fermented liquid to produce a beer-flavored beverage. The produced beer-flavored beverage had a bitterness unit of from 40 to 90 BUs, a sugar content of from 1.0 to 3.5 g/100 mL, a pH of from 4.2 to 4.7, and a carbon dioxide gas concentration of from 0.205 to 0.304 (w/w)%.

In each of the Examples and Comparative Examples, the alcohol content, the real extract concentration, and the ethyl caprylate content were adjusted to the values shown in Tables 1 to 3 by appropriately setting the set temperature and the holding time of each temperature region, the amount of hop added, the fermentation temperature, the fermentation time, and the like when preparing the saccharified liquid, and further adjusting the amount of ethyl caprylate added and the amount of spirits added as necessary.

<Sensory evaluation>

Three panelists who had been regularly trained evaluated the beer-flavored beverages obtained in the Examples and Comparative Examples cooled to about 4°C for the "rich flavor and thickness" and "effect of suppressing alcohol smell" of each beverage by a score in a range of from 5.0 (maximum value) to 1.0 (minimum value) in increments of 0.5 based on the score criteria described below, and average values of the scores of the three panelists were calculated. The results are presented in Tables 1 to 3.

In the evaluation, samples that meet the following criteria "5.0", "4.0", "3.0", "2.0", and "1.0" were prepared in advance to standardize the criteria among the panelists. In addition, in any of the sensory evaluations of Tables 1 to 3, for the same beverage, no difference in a score value of 1.5 or more was observed among the panelists.

[Score Criteria for Rich Flavor and Thickness]

· "5.0": Rich flavor and thickness suitable for beer-flavored beverages are very strongly felt.
· "4.0": Rich flavor and thickness suitable for beer-flavored beverages are strongly felt.
· "3.0": Rich flavor and thickness suitable for beer-flavored beverages are sufficiently felt.
· "2.0": Rich flavor and thickness are poorly felt.
· "1.0": Rich flavor and thickness are hardly felt.

[Score Criteria for Effect of Suppressing Alcohol Smell]

· "5.0": Alcohol smell unsuitable for beer-flavored beverages is not felt at all.
· "4.0": Alcohol smell unsuitable for beer-flavored beverages is hardly felt.
· "3.0": Alcohol smell unsuitable for beer-flavored beverages is not felt in a large extent.
· "2.0": Alcohol smell unsuitable for beer-flavored beverages is strongly felt.
· "1.0": Alcohol smell unsuitable for beer-flavored beverages is very strongly felt.

[Table 1]

Table 1

| | | Example 1 | Example 2 | Comparative Example 1 | Comparative Example 2 | Example 3 | Example 4 | Example 5 | Example 6 | Example 7 |
|---|---|---|---|---|---|---|---|---|---|---|
| Alcohol content | (v/v)% | 10.0 | 10.0 | 18.0 | 18.0 | 18.0 | 18.0 | 18.0 | 18.0 | 18.0 |
| Real extract concentration | (w/w)% | 11.80 | 11.80 | 11.80 | 10.00 | 11.80 | 11.80 | 11.80 | 11.80 | 11.80 |
| Ethyl caprylate content | mass ppb | 100 | 1200 | 10 | 100 | 100 | 260 | 500 | 750 | 1200 |
| Real extract concentration/alcohol content | | 1.2 | 1.2 | 0.7 | 0.6 | 0.7 | 0.7 | 0.7 | 0.7 | 0.7 |
| Ethyl caprylate content/alcohol content | | 10.0 | 120.0 | 0.6 | 5.6 | 5.6 | 14.4 | 27.8 | 41.7 | 66.7 |
| Ethyl caprylate content/real extract concentration | | 8.5 | 101.7 | 0.8 | 10.0 | 8.5 | 22.0 | 42.4 | 63.6 | 101.7 |
| Rich flavor and thickness | | 3.75 | 4.50 | 2.75 | 2.50 | 3.50 | 3.75 | 4.25 | 4.25 | 5.00 |
| Effect of suppressing alcohol smell | | 3.75 | 5.00 | 2.00 | 2.75 | 3.50 | 3.75 | 4.25 | 5.00 | 4.50 |

[Table 2]

[Table 2]

Table 2

| | | Example 8 | Example 9 | Example 10 | Example 11 | Example 12 | Example 13 | Example 14 | Example 15 |
|---|---|---|---|---|---|---|---|---|---|
| Alcohol content | (v/v)% | 20.0 | 20.0 | 20.0 | 20.0 | 20.0 | 30.0 | 30.0 | 30.0 |
| Real extract concentration | (w/w)% | 11.80 | 11.80 | 11.80 | 11.80 | 11.80 | 11.80 | 11.80 | 20.00 |
| Ethyl caprylate content | mass ppb | 100 | 260 | 500 | 750 | 1200 | 100 | 500 | 1200 |
| Real extract concentration/alcohol content | | 0.6 | 0.6 | 0.6 | 0.6 | 0.6 | 0.4 | 0.4 | 0.7 |
| Ethyl caprylate content/alcohol content | | 5.0 | 13.0 | 25.0 | 37.5 | 60.0 | 3.3 | 16.7 | 40.0 |
| Ethyl caprylate content/real extract concentration | | 8.5 | 22.0 | 42.4 | 63.6 | 101.7 | 8.5 | 42.4 | 60.0 |
| Rich flavor and thickness | | 3.25 | 3.50 | 3.75 | 3.75 | 4.25 | 3.00 | 3.00 | 3.25 |
| Effect of suppressing alcohol smell | | 3.25 | 3.75 | 4.00 | 4.00 | 4.25 | 3.00 | 3.25 | 3.50 |

[Table 3]

Table 3

| | | Example 16 | Example 17 | Example 18 | Example 19 | Example 20 | Example 21 |
|---|---|---|---|---|---|---|---|
| Alcohol content | (v/v)% | 18.0 | 18.0 | 18.0 | 30.0 | 30.0 | 30.0 |
| Real extract concentration | (w/w)% | 18.00 | 18.00 | 18.00 | 18.00 | 18.00 | 18.00 |
| Ethyl caprylate content | mass ppb | 100 | 500 | 1200 | 100 | 500 | 1200 |
| Real extract concentration/alcohol content | | 1.0 | 1.0 | 1.0 | 0.6 | 0.6 | 0.6 |
| Ethyl caprylate content/alcohol content | | 5.6 | 27.8 | 66.7 | 3.3 | 16.7 | 40.0 |
| Ethyl caprylate content/real extract concentration | | 5.6 | 27.8 | 66.7 | 5.6 | 27.8 | 66.7 |
| Rich flavor and thickness | | 4.00 | 4.50 | 4.75 | 3.75 | 3.75 | 4.00 |
| Effect of suppressing alcohol smell | | 4.25 | 4.50 | 5.00 | 3.25 | 3.75 | 3.75 |

The beer-flavored beverages of Examples 1 to 21 provided beverages in which rich flavor and thickness suitable for beer-flavored beverages were felt and an unsuitable smell of alcohol was suppressed. On the other hand, in the beer-flavored beverages of Comparative Examples 1 and 2, the effect of suppressing the smell of alcohol unsuitable for beer-flavored beverages was insufficient, and the rich flavor and thickness were barely felt.

## Claims

1. A beer-flavored beverage, comprising:

   an alcohol content of 10.0 (v/v)% or more;
   a real extract concentration of 10.5 (w/w)% or more; and
   an ethyl caprylate content of 25 ppb by mass or more.

2. The beer-flavored beverage according to claim 1, wherein the alcohol content is 16.0 (v/v)% or more and 30.0 (v/v)% or less.

3. The beer-flavored beverage according to claim 1 or 2, wherein the real extract concentration is 10.5 (w/w)% or more and 40.0 (w/w)% or less.

4. The beer-flavored beverage according to claim 1 or 2, wherein the ethyl caprylate content is 25 ppb by mass or more and 3000 ppb by mass or less.

5. The beer-flavored beverage according to claim 1 or 2, wherein a ratio of the real extract concentration (unit: (w/w)%) to the alcohol content (unit: (v/v)%), [the real extract concentration/the alcohol content], is 0.10 or more and 5.00 or less.

6. The beer-flavored beverage according to claim 1 or 2, wherein a ratio of the ethyl caprylate content (unit: ppb by mass) to the alcohol content (unit: (v/v)%), [the ethyl caprylate content/the alcohol content], is 1.0 or more and 400.0 or less.

7. The beer-flavored beverage according to claim 1 or 2, wherein a ratio of the ethyl caprylate content (unit: ppb by mass) to the real extract concentration (unit: (w/w)%), [the ethyl caprylate content/the real extract concentration], is 2.0 or more and 400.0 or less.

8. A method for producing a beer-flavored beverage, the method comprising at least steps (a) to (c) set forth below:

· step (a): a step of adjusting and/or confirming an alcohol content of the beer-flavored beverage to be 10.0 (v/v)% or more;
· step (b): a step of adjusting and/or confirming a real extract concentration of the beer-flavored beverage to be 10.5 (w/w)% or more; and
· step (c): a step of adjusting and/or confirming an ethyl caprylate content of the beer-flavored beverage to be 25 ppb by mass or more.

## INTERNATIONAL SEARCH REPORT

| International application No. |
| --- |
| **PCT/JP2024/029871** |

### A. CLASSIFICATION OF SUBJECT MATTER

*C12C 5/02*(2006.01)i; *C12G 3/04*(2019.01)i; *C12G 3/06*(2006.01)i
FI: C12C5/02; C12G3/04; C12G3/06

According to International Patent Classification (IPC) or to both national classification and IPC

### B. FIELDS SEARCHED

Minimum documentation searched (classification system followed by classification symbols)

C12C5/02; C12G3/04; C12G3/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2023-104004 A (SUNTORY HOLDINGS LTD.) 28 July 2023 (2023-07-28)<br>claims 9, 17, paragraphs [0007], [0035], table 1 | 1-8 |
| Y | 醸造物の成分, 財団法人日本醸造協会, 1999, (Brewing Society of Japan), non-official translation (Brew Components)<br>page 211, right column, table 3 | 1-8 |
| Y | JP 2021-153501 A (SAPPORO BREWERIES LTD.) 07 October 2021 (2021-10-07)<br>claims 1, 4, 5, examples, in particular, table 1 | 1-8 |
| Y | JP 2021-73897 A (SAPPORO BREWERIES LTD.) 20 May 2021 (2021-05-20)<br>claims 1, 6, table 2 of examples | 1-8 |
| A | JP 2021-78408 A (SAPPORO BREWERIES LTD.) 27 May 2021 (2021-05-27)<br>claims 1, 2, 5, examples | 1-8 |

☐ Further documents are listed in the continuation of Box C.      ☑ See patent family annex.

| | |
| --- | --- |
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **01 November 2024** | **19 November 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/029871**

| Patent document cited in search report | | | Publication date (day/month/year) | Patent family member(s) | | | Publication date (day/month/year) |
|---|---|---|---|---|---|---|---|
| JP | 2023-104004 | A | 28 July 2023 | WO | 2023/127711 | A1 | |
| | | | | TW | 202342716 | A | |
| JP | 2021-153501 | A | 07 October 2021 | (Family: none) | | | |
| JP | 2021-73897 | A | 20 May 2021 | (Family: none) | | | |
| JP | 2021-78408 | A | 27 May 2021 | (Family: none) | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021159020 A

**Non-patent literature cited in the description**

- 8.4.3 Alcolyzer method. Revised BCOJ Beer Analysis Method. Public Interest Incorporated Foundation, Brewing Society of Japan, 2013
- 8.15 Bitterness Unit. Revised BCOJ Beer Analysis Method. Public Interest Incorporated Foundation, The Brewing Society of Japan, edited by Analysis Committee, Brewery Convention of Japan, Brewers Association of Japan, 2013
- BCOJ Beer Analysis Method. The Brewing Society of Japan, 01 November 2004
- 8.8 Color Scale. Revised BCOJ Beer Analysis Method. Public Interest Incorporated Foundation, The Brewing Society of Japan, 2013
- Revised BCOJ Beer Analysis Method. Public Interest Incorporated Foundation, The Brewing Society of Japan, 2013